Europäisches Patentamt

European Patent Office

Office européen des brevets

(11) Veröffentlichungsnummer : **0 488 935 A2**

# (12) EUROPÄISCHE PATENTANMELDUNG

(21) Anmeldenummer : **91710047.1**

(22) Anmeldetag : **27.11.91**

(51) Int. Cl.$^5$ : **B60R 21/26**

(30) Priorität : **28.11.90 DE 4037767**

(43) Veröffentlichungstag der Anmeldung :
**03.06.92 Patentblatt 92/23**

(84) Benannte Vertragsstaaten :
**DE ES FR GB IT SE**

(71) Anmelder : **Dynamit Nobel Aktiengesellschaft**
**Postfach 12 61**
**W-5210 Troisdorf (DE)**

(72) Erfinder : **Brede, Uwe**
**Boenerstrasse 32**
**W-8510 Fürth (DE)**
Erfinder : **Kraft, Josef**
**Heinrichsburgstrasse 33**
**W-8438 Berg (DE)**
Erfinder : **Scheiderer, Gerrit**
**Spitzwiesenstrasse 16**
**W-8510 Fürth (DE)**

(54) **Gasgenerator, insbesondere Rohrgasgenerator für Airbag.**

(57)   Der Gasgenerator (10) weist zwei zueinander koaxiale Rohre (12,16) unterschiedlichen Durchmessers auf, zwischen denen sich ein Ringzwischenraum bildet. Das Innenrohr (16) ist mit gasentwickelndem Material in Form von Pellets (24) gefüllt, die beim Zünden Druckgas entwickelt, das über Öffnungen in den beiden Rohren (12,16) austritt. In das Innenrohr (16) hinein ragt eine Anzündvorrichtung (26), die sich durch die zylindrischen Wandungen der beiden Rohre (12,16) hindurch erstreckt. Gehalten wird die Anzündvorrichtung (26) von einem Ring- oder rohrförmigen Haltekörper (30), der wesentlich kürzer ist als die beiden Rohre (12,16) und den Zwischenraum zwischen den beiden Rohren (12,16) ausfüllt. Die beiden Rohre (12,16) sind mit einander fluchtenden Umfangsdurchbrechungen (50,52) versehen, während der Haltekörper (30) ein Aufnahmedurchgangsloch (32) aufweist, in das die Anzündvorrichtung (26) eingeschraubt ist. Der Haltekörper (30) weist ferner einen Schlitz (58) auf. Über den Haltekörper (30) ist die Anzündvorrichtung (26) zuverlässig gehalten.

FIG. 2

EP 0 488 935 A2

Die Erfindung betrifft einen Gasgenerator, insbesondere einen Rohrgasgenerator für ein aufblasbares Aufprallschutzkissen, mit einem Außenrohr, einem Innenrohr zur Aufnahme von gasentwickelndem Material, wobei das Innenrohr unter Bildung eines Ringzwischenraumes mit radialem Abstand zum Außenrohr in diesem angeordnet ist, Verschlußdeckeln zum Verschließen der offenen stirnseitigen Enden der beiden Rohre, einer bis an das Innere des Innenrohres hineinragenden im mittleren Bereich der axialen Erstreckung der Rohre angeordnete Anzündvorrichtung zum Zünden des gasentwickelnden Materials.

Aus DE-39 14 690 C2 ist ein (Rohr-)Gasgenerator bekannt, der ein Außenrohr aufweist, in dessen Wandung (Mantel) Gasaustrittsöffnungen angeordnet sind und dessen stirnseitige Enden durch scheibenähnliche in das Außenrohr eingesteckte Verschlußdeckel verschlossen sind. Koaxial zum Außenrohr ist in diesem ein ebenfalls in seinem Mantel mit Gasaustrittsöffnungen versehenes Innenrohr angeordnet, dessen Außendurchmesser kleiner ist als der Innendurchmesser des Außenrohres, so daß zwischen den beiden Rohren ein radialer Abstand besteht. In dem Ringzwischenraum ist ein Filtermaterial angeordnet. Das Innenrohr, dessen axiale Länge geringer ist als diejenige des Außenrohres, ist mit (druck-)gasentwickelndem Material ausgefüllt (im folgenden auch mit druckgaserzeugender Ladung - beispielsweise in Form von Pellets - bezeichnet), das durch eine Anzündeinheit gezündet wird. Das bei Zündung des gasentwickelnden Materials entstehende Gas tritt über die Gasaustrittsöffnungen des Innenrohres durch das Filtermaterial hindurch, um über die Gasaustrittsöffnungen in dem Außenrohr nach außen zu gelangen. Der Gasgenerator ist im Falle seiner Verwendung für einen Kraftfahrzeuginsassen-Aufprallschutz (auch "Airbag" genannt) in einem zu einer Seite hin offenen Gehäuse angeordnet, wobei diese Öffnung durch ein zusammengelegtes Gewebe, das aufblasbare Aufprallschutzkissen, verschlossen ist. Bei diesem bekannten Rohrgasgenerator ist die Anzündvorrichtung an einem Ende des Gasgenerators in dem Verschlußdeckel angeordnet. Diese "einseitige" Anordnung der Zündvorrichtung ist im Hinblick auf eine möglichst gleichmäßige Zündung der druckgaserzeugenden Ladung unvorteilhaft. Eine gleichmäßigere Zündung der druckgaserzeugenden Ladung könnte ereicht werden, wenn die Anzündvorrichtung in der Mitte der Ladung angeordnet ist, zu beiden Seiten der Anzündvorrichtung also in etwa gleichviel und gleichverteiltes gasentwickelndes Material sich befindet. Derartige Anordnungen der Anzündvorrichtungen von Gasgeneratoren sind aus US-PS 4 437 681 und US-PS 4 561 675 bekannt. Gemäß der letzteren US-Patentschrift ist die Anzündvorrichtung quer zur Längserstreckung des Gasgenerators in der Mitte von dessen Längserstreckung angeordnet, wobei die Anzündvorrichtung in der relativ dicken Gehäusewand verankert bzw. befestigt ist.

Aus DE 39 09 841 A1, von der im Oberbegriff des Patentanspruchs 1 ausgegangen wird, ist ein Doppelrohrgasgenerator bekannt. Dieser Gasgenerator entspricht im wesentlichen dem oben anhand der DE 39 41 690 C2 beschriebenen, wobei jedoch im Unterschied dazu die Anzündvorrichtung im mittleren Bereich der axialen Erstreckung des Rohrgasgenerators angeordnet ist.

Die Problematik der Befestigung der Anzündvorrichtung in der Wandung des Außenrohres eines Rohrgasgenerators besteht darin, daß diese Verbindung nicht hinreichend stabil ausgebildet werden kann, da das Außenrohr - genauso wie das Innenrohr - relativ dünn ist, mithin eine den beim Zünden der Ladung entstehenden Kräften zuverlässig entgegenwirkende Befestigung nicht erreichbar ist.

Der Erfindung liegt die Aufgabe zugrunde, einen Rohrgasgenerator der zuvor genannten Art zu schaffen, bei dem die Anzündvorrichtung an der bezüglich einer gleichmäßigen Zündung des gasentwickelnden Materials günstigen Position im axial mittleren Bereich ausreichend stabil mit den beiden Rohren verankert ist.

Zur Lösung dieser Aufgabe wird mit der Erfindung vorgeschlagen, daß in den beiden Rohren miteinander fluchtende Umfangsdurchbrechungen angeordnet sind, durch die sich hindurch die Anzündvorrichtung - quer zur axialen Erstreckung der Rohre - erstreckt, und daß der Ringzwischenraum zwischen dem Innenrohr und dem Außenrohr im Bereich der Umfangsdurchbrechungen von einem im wesentlichen kreissegmentförmigen Haltekörper ausgefüllt ist, der ein mit den Umfangsdurchbrechungen fluchtendes Aufnahmedurchgangsloch zur Halterung der Anzündvorrichtung aufweist.

Nach der Erfindung wird die Anzündvorrichtung von einem Haltekörper gehalten, mit dem sie vorzugsweise verschraubt ist. Der Haltekörper weist ein Aufnahmedurchgangsloch auf, in dem die Anzündvorrichtung formschlüssig gehalten ist. Die Anzündvorrichtung erstreckt sich darüberhinaus durch Umfangsdurchbrechungen in den beiden Rohren; diese Umfangsdurchbrechungen sind - bezüglich der axialen Erstreckung des Gasgenerator - im mittleren Bereich der Rohrwandungen ausgebildet und fluchten miteinander. Der Haltekörper, der im wesentlichen ringsegmentförmig ausgebildet ist, weist eine Dicke auf, die gleich dem radialen Abstand der beiden Rohre zueinander ist. Damit füllt der Haltekörper den Zwischenraum zwischen den beiden Rohren im Bereich von deren Umfangsdurchbrechungen und um diese herum aus. Der Haltekörper ist wie ein Einlegeteil zwischen die beiden Rohre gelegt. Wirken beim Zünden der druckgasentwickelnden Ladung radiale Kräfte auf die Anzündvorrichtung, stützt sich diese über den Haltekörper gegen die Innenseite des Außenrohres ab, wobei er im Bereich des Randes der Umfangsdurchbrechung im Außenrohr an diesem anliegt. Der Haltekörper sollte ohne radiales Spiel im Ringzwischenraum untergebracht sein. Mit der Erfindung ist also eine formschlüssige Befestigung der Anzündvorrichtung in der zylindrischen aus den beiden Rohren bestehenden Gehäusewand des Gasgenerators geschaffen.

Der Umstand, daß der Haltekörper eine möglichst große Dicke (maximal gleich dem radialen Abstand zwischen den beiden Rohren) aufweist, wirkt sich auch noch vorteilhaft bezüglich der Festigkeit und Formschlüssigkeit der Verbindung zur Anzündvorrichtung aus. Da die Anzündvorrichtung aufgrund der Abmessungen des Rohrgasgenerators in ihrem sich durch das Aufnahmedurchgangsloch erstreckenden Abschnitt einen Außendurchmesser aufweist, der nur wenig kleiner als der Außendurchmesser des Innenrohres oder, wenn man sich den ringsegmentförmigen Haltekörper als geschlossenen Ring vorstellt, nur wenig kleiner als der Innendurchmesser des Haltekörpers ist, weist der Haltekörper in seinem die Anzündvorrichtung umschließenden Bereich nur eine relativ geringe Stärke (Dicke) auf. Aufgrund der zylindrischen Ausbildung des Gasgeneratorgehäuses umschließt der Haltekörper das Anzündelement nämlich lediglich in seinem radial außenliegenden an das Außenrohr angrenzenden Bereich. Die gesamte Tiefe des Aufnahmedurchgangsloches im Haltekörper kann wegen der zylindrischen Form des Innenrohres nämlich nicht zur Verbindung von Anzündvorrichtung und Haltekörper ausgenutzt werden. Insoweit vorteilhaft ist es, wenn das Innenrohr im Bereich seiner Umfangsdurchbrechung abgeflacht ist; dadurch kann die Anzündvorrichtung tiefer in den Haltekörper eindringen und somit sicherer dort gehalten werden.

Vorzugsweise ist der Haltekörper rohrförmig ausgebildet, wobei er den Ringzwischenraum über den gesamten Umfang ausfüllt. Damit wird eine weitere Erhöhung der Festigkeit des Rohrgasgenerators erreicht. Wenn sich das Innenrohr bei der Zündung der druckgaserzeugenden Ladung aufweitet, preßt es den das Innenrohr umschließenden rohrförmigen Haltekörper gegen die Innenseite des Außenrohres. Der rohrförmige Haltekörper schafft also eine mechanische Koppelung zwischen den beiden Rohren bei der Druckgasentwicklung, so daß beide Rohre zusammen den radialen Kräften entgegenwirken und ein Bersten des Gasgeneratorgehäuses in dessen mittleren Bereich verhindern.

Um die axiale Erstreckung des rohrförmigen Haltekörpers bei gleichbleibender Stabilität der Verbindung zwischen der Anzündvorrichtung und dem Haltekörper so klein wie möglich machen zu können, ist gemäß einem weiteren Vorschlag der Erfindung vorgesehen, daß der rohrförmige Haltekörper in dem dem Aufnahmedurchgangsloch diametral gegenüberliegenden Bereich geschlitzt ist, wobei sich der Schlitz über die gesamte axiale Länge des rohrförmigen Haltekörpers erstreckt. Der Haltekörper weitet sich aufgrund des Schlitzes bei Druckbelastung infolge der Zündung des druckgasentwickelnden Material auf, wodurch der schwächste Bereich des Haltekörper, nämlich der Bereich um das Aufnahmedurchgangsloch herum bis zu den axialen Enden des Haltekörpers entlastet ist und in diesem Bereich ein Reißen des Haltekörpers vermieden wird. Ferner wird durch die Aufweitung des Haltekörpers erreicht, daß der Haltekörper im Aufnahmedurchgangslochbereich "gestaucht" wird, so daß auch in soweit einem Zerreißen des Haltekörpers in diesem kritischen Bereich entgegengewirkt wird. Der Schlitz hat also den Vorteil, daß die sich in axialer Erstreckung des Gasgenerators an das Aufnahmedurchgangsloch anschließenden Bereiche des Haltekörpers relativ kurz ausgebildet werden können, der Haltekörper sich also in axialer Richtung zu beiden Seiten über die Umfangsdurchbrechungen in den beiden Rohren hinaus nur geringfügig erstreckt. Diese Erstreckung ist in jedem Falle erforderlich, um ausreichend Abstützfläche für den Haltekörper gegen das Außenrohr zu schaffen.

Vorzugsweise umschließen die Umfangsdurchbrechungen die Anzündvorrichtung seitlich. Damit sorgen sie dafür, daß sich die Anzündvorrichtung samt Haltekörper in axialer Richtung noch in Umfangsrichtung bewegen kann, insoweit also festgelegt ist.

Vorzugsweise ist die Anzündvorrichtung in dem Aufnahmedurchgangsloch mit dem Haltekörper verschraubt. Dazu weist das Aufnahmedurchgangsloch ein Innengewinde und die Anzündvorrichtung ein korrespondierendes Außengewinde auf.

Gemäß einer vorteilhaften Weiterbildung der Erfindung weist die Anzündvorrichtung eine Anzündeinheit und einen Trägerkörper auf, an dem die Anzündeinheit befestigt ist und der seinerseits von dem Haltekörper gehalten ist. Der Trägerkörper, der vorzugsweise eine zylindrische Außenkontur aufweist, trägt die eigentliche Anzündeinheit, die in axialer Richtung vom Trägerkörper abstehend angeordnet ist und bis in das Innenrohr hineinragt.

Die Umfangsdurchbrechung im Außenrohr umschließt vorzugsweise den Trägerkörper, der seinerseits einen Schulteransatz aufweist, der über ein Dichtelement an dem Innenrohr anliegt. Das eingeklemmt gehaltene Dichtelement dichtet die "druckgaserzeugende Kammer" zuverlässig ab. Sofern ein Dichtelement vorgesehen ist, ist es vorteilhaft, am Innenrohr eine ebene Anlagefläche für das Dichtelement zu schaffen. Dies wird vorteilhafterweise durch eine Abflachung (nach innen gerichtete Anprägung oder Plandrückung) des Innenrohres im Bereich von dessen Umfangsdurchbrechung erreicht. Die Abflachung kann aber auch dadurch geschaffen werden, daß die Außenfläche des Innenrohres bereichsweise abgeflacht wird. Die Anzündeinheit ist gegenüber dem Trägerkörper vorzugsweise mit Klebstoff abgedichtet.

Nachfolgend wird anhand der Figuren ein Ausführungsbeispiel der Erfindung näher erläutert. Im einzelnen zeigen:

Fig. 1 eine Außenansicht eines Gasgenerators teilweise aufgebrochen und in diesem Bereich im Längsquerschnitt dargestellt und

Fig. 2 einen Querschnitt durch den mittleren Bereich des Gasgenerators nach Fig. 1 im größeren Maßstab.

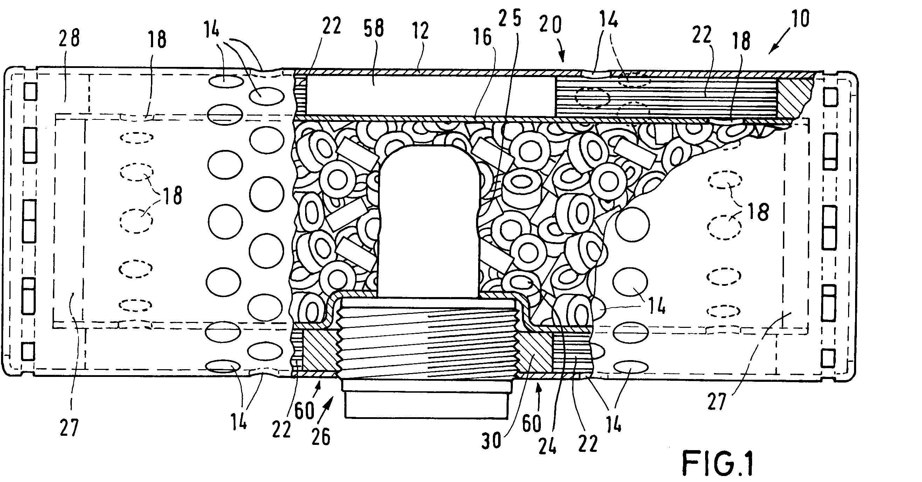

In Figur 1 ist ein Rohrgasgenerator 10 insbesondere für einen Kraftfahrzeug-Airbag in Außenansicht, teilweise aufgebrochen und geschnitten dargestellt. Der Rohrgasgenerator 10 weist ein Metall-Außenrohr 12 auf, in dessen Mantel mehrere Gasaustrittsöffnungen 14 ausgebildet sind. Die Gasaustrittsöffnungen 14 sind gleichmäßig verteilt über vier Umfangslinien des Außenrohres 12 verteilt angeordnet. Die Gasaustrittsöffnungen 14 befinden sich im wesentlichen im mittleren Abschnitt des Außenrohres 12. Innerhalb des Außenrohres 12 ist ein koaxial zu diesem angeordnetes Innenrohr 16 aus Metall untergebracht. In den axialen Endabschnitten des Mantels des Innenrohres 16 sind ebenfalls Gasaustrittsöffnungen 18 ausgebildet, wobei diese Gasaustrittsöffnungen 18 gleichmäßig über zwei Umfangslinien im Bereich der Endabschnitte des Innenrohres 16 verteilt angeordnet sind. Zwischen den Gasaustrittsöffnungen 14 des Außenrohres 12 und den Gasaustrittsöffnungen 18 des Innenrohres 16 besteht also ein axialer Abstand.

Der Außendurchmesser des Innenrohres 16 ist kleiner als der Innendurchmesser des Außenrohres 12, so daß zwischen dem Außen- und dem Innenrohr ein Ringzwischenraum 20 entsteht. Dieser Ringzwischenraum ist in seinen sich zwischen den Gasaustrittsöffnungen 14,18 der beiden Rohre 12,16 erstreckenden Bereich mit Metallfilter-Paketen 22 (Edelstahl-Drahtgeflechtmatten) ausgefüllt.

Das Innenrohr 16 ist mit gasentwickelndem Material auf Natriumazid-Basis ausgefüllt, das bei seiner Verbrennung Druckgas erzeugt. Das gasentwickelnde Material, auch druckgaserzeugende Ladung genannt, liegt in Form von sogenannten Pellets 24 vor, die ungeordnet in dem Innenrohr 16 untergebracht sind. Eine elektrische Anzündvorrichtung 26 zum Zünden der druckgaserzeugenden Ladung ist an den beiden Rohren 12,16 befestigt und ragt durch eine Öffnung im Innenrohr 16 in dieses teilweise hinein.

Der Gasgenerator 10 ist an den stirnseitigen Enden des Außenrohres 12 durch scheibenähnliche Verschlußdeckel 28 verschlossen. An den Enden des Innenrohres 16 sind federelastische, kompressible Scheibenelemente 27 aus Keramikfilz oder -gewebe angeordnet, die sich über die gesamte Innenquerschnittsfläche des Innenrohres 16 erstrecken und einerseits gegen die Pellets 24 und andererseits gegen die Verschlußdeckel 28 abgestützt sind, wobei sie die Pellets 24 mit Federkraft zusammenhalten. Diese Metall-Verschlußdeckel 28 halten und positionieren auch das Innenrohr 16 in hier nicht näher erläuteter Weise.

Nachfolgend soll kurz die Funktionsweise des in Figur 1 dargestellten Gasgenerators 10 beschrieben werden. Die elektrische Anzündvorrichtung 26, bei der es sich bei diesem Ausführungsbeispiel um einen sogenannten Schichtbrückenzünder mit Initialstoff handelt, wird durch einen definierten elektrischen Impuls gezündet. Bei Verwendung des Rohrgasgenerators gemäß Figur 1 als Druckgaserzeuger in einem Airbag wird dieser elektrische Impuls beispielsweise durch Schließen eines Trägheitsschalters im Falle eines Zusammenstoßes des Kraftfahrzeuges mit einem anderen Gegenstand an die Zündeinheit 26 angelegt. In der Anzündvorrichtung 26 wird eine sogenannte Verstärkungsladung gezündet; die dabei entstehenden Anzündschwaden (Flamme, Gas, heiße Verbrennungsprodukte) gelangen über in der Anzündvorrichtung 26 vorgesehene Öffnungen 25 in den Innenraum des Innenrohres 16, wo sie die (Treibladungs-)Pellets 24 gleichmäßig, aber -zeitig zünden. Im Innenrohr 16 werden je nach Ausführung eine unterschiedliche Menge an gasentwickelndem Material in Gas mit einem Druck von ca. 200 bar umgesetzt. Die heißen Gase, die zu ca. 95 % aus Stickstoff bestehen, gelangen über die Gasaustrittsöffnungen 18 an den Enden des Innenrohres 16 aus diesem heraus zu den Filterpaketen 22. Die Filterpakete 22 haben die Aufgabe, die Gase zu kühlen und von Partikeln (Feststoffen) und Kondensaten zu reinigen. Die derart abgekühlten und gereinigten Gase treten über die Gasaustrittsöffnungen 14 im Außenrohr 12 aus. Der hier beschriebene Rohrgasgenerator 10 erzeugt in einer Zeit von ca. 30 ms in einem Testvolumen von 60 dm³ einen Gasdruck von ca. 3 bar.

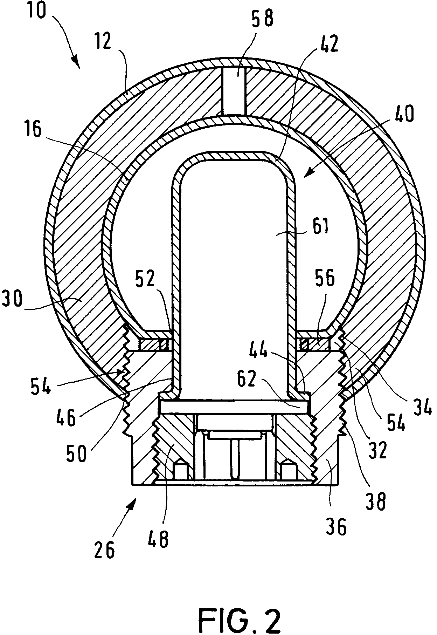

Wie anhand von den Fig. 1 und 2 zu erkennen ist, ist die Anzündvorrichtung 26 von einem ring- oder rohrförmigen Haltekörper 30 gehalten. Der Haltekörper 30 ist konzentrisch zu den beiden Rohren 12,16 angeordnet und weist eine Dicke auf, die gleich dem radialen Abstand der beiden Rohre 12,16 voneinander ist. Der Haltekörper 30 füllt also den gesamten Ringzwischenbereich aus. Gemäß Fig. 1 ist der Haltekörper zwischen den beiden Filterpaketen 22 angeordnet, wobei er an seinen Stirnseiten an den stirnseitigen einander zugewandten Enden der Filterpakete 22 anliegt.

Der Haltekörper 30 weist gemäß Fig. 2 ein Aufnahmedurchgangsloch 32 auf, das sich axial durch den Haltekörper 30 erstreckt. Das Durchgangsloch 32 ist mit einem bei 34 angedeuteten Innengewinde versehen und dient zur Aufnahme eines im wesentlichen zylindrischen Trägerkörpers 36, der ein bei 38 angedeutetes Außengewinde aufweist. Der Trägerkörper 36 ist Teil der Anzündvorrichtung 26, und trägt eine Anzündeinheit 40 mit einem im wesentlichen zylindrischen an einem Ende geschlossenen Gehäuse 42. In dieses Gehäuse 42 ist ein weiteres im wesentlichen zylindrisches Gehäuse 61 mit einem Flansch 62 eingesetzt, das in der Ansicht gezeigt ist und in bekannter Weise einen elektrischen Anzünder, eine Anzündladung usw. enthält. Das andere Ende des zylindrischen Gehäuses 42 weist einen Außenringflansch 44 auf. Das Gehäuse 42 erstreckt sich durch eine zentrale Bohrung 46 im Trägerkörper 36 hindurch, wobei der Außenringflansch 44 gegen einen ringförmigen Versatz in der Durchgangsbohrung 46 anliegt. In die in ihrem den beiden Rohren 12, 16 abgewandten Bereich mit einem Innengewinde versehenen Durchgangsbohrung 46 ist ein Gewindestopfen 48 eingeschraubt, der die Ringflansche 44 und 62 zwischen sich und dem ringförmigen Versatz eingeklemmt hält und somit das Gehäuse 42 der Anzündeinheit 40 im Trägerkörper 36 fixiert. Zum Abdichten des Gehäuses 42 gegenüber dem Trägerkörper 36 ist der Ringflansch 44 mit dem Trägerkörper 36 verklebt.

Die wie oben beschrieben ausgebildete Anzündvorrichtung 26, deren Längserstreckung quer zur Längserstreckung des Gasgenerators 10 gerichtet ist, erstreckt sich durch zwei Umfangsdurchbrechungen 50, 52 in den beiden Rohren 12, 16. Diese beiden Umfangsdurchbrechungen 50, 52 fluchten miteinander und sind koaxial zueinander ausgerichtet, weisen jedoch unterschiedliche Durchmesser auf, da die Umfangsbohrung 50 im Außenrohr 12 die Anzündvorrichtung 26 im Breich ihres Trägerkörpers 36 umschließt, der einen größeren Durchmesser aufweist, als das Gehäuse 42 der Anzündeinheit, das von der Umfangsdurchbrechung 52 im Innenrohr 16 umschlossen wird. Eine Befestigung der Anzündvorrichtung 26 über die Umfangsdurchbrechungen 50,52 an den beiden Rohren 12,16 erfolgt nicht. Vielmehr ist der Trägerkörper 36 der Anzündvorrichtung 26 durch die Verschraubung mit dem Haltekörper 30 mit diesem formschlüssig verbunden. Die radial nach außen gerichteten auf das Gehäuse 42 der Anzündeinheit 40 wirkenden Kräfte beim Druckaufbau des Gases werden über den Gewindestopfen 48 und den Trägerkörper 36 von dem Haltekörper 30 aufgefangen, der gegen die Innenseite des Außenrohres 12 gepreßt wird. Diese Anpressung erfolgt aber auch aufgrund einer Ausdehnung des Innenrohres 16. Die beiden Rohre sind über den den Ringzwischenraum 20 ausfüllenden Haltekörper 30 mechanisch miteinander gekoppelt.

Wie anhand von Fig. 2 deutlich zu erkennen ist, ist der Bereich, in dem das Innengewinde 34 des Aufnahmedurchgangsloches 32 mit dem Außengewinde 38 des Trägerkörpers 36 ineinandergreift, relativ schmal. Dies liegt daran, daß der Durchmesser des Aufnahmedurchgangsloches 32 nur geringfügig kleiner als der Außendurchmesser des Innenrohres 16 bzw. der Innendurchmesser des Haltekörpers 30 ist und der Trägerkörper 26 aufgrund der zylindrischen Form des Innenrohres 16 nicht übermäßig tief in das Aufnahmedurchgangsloch 32 eintauchen kann. Der erstgenannte Umstand hat darüberhinaus zur Folge, daß der sich in Umfangsrichtung an das Aufnahmedurchgangsloch 32 anschließende Bereich 54 des Haltekörpers 30 relativ dünn ist. In diesem Bereich kann nicht die volle Stärke des Haltekörpers 30 ausgenutzt werden. Um bei zylindrischem Trägerkörper 36 eine ausreichende Verzahnung des Innengewindes 34 mit dem Außengewinde 36 zu erreichen, weist das Innenrohr 16 im Bereich seiner Umfangsdurchbrechung 52 eine Abflachung auf. Die Abflachung ist durch eine Verprägung des Innenrohres 16 entstanden. Die sickenähnliche Abflachung des Innenrohres 16 erlaubt es, daß der Trägerkörper 36 weiter in das Aufnahmedurchgangsloch 32 eintaucht. Auf seiner dem Innenrohr 16 zugewandten ringförmigen Stirnfläche ist der Trägerkörper 36 mit einem das Gehäuse 42 umgebenden Dichtungsring 56 versehen, der zwischen dem Trägerkörper 36 und der Abflachung des Innenrohres 16 eingeklemmt gehalten ist.

In seinem dem Aufnahmedurchgangsloch 32 diametral gegenüberliegenden Bereich ist der Haltekörper 30 mit einem Schlitz oder Spalt 58 versehen, der sich radial und axial durch den Haltekörper erstreckt. Der Schlitz 58 erlaubt bei der Druckgasentwicklung eine Auffweitung des Haltekörpers 30 und entlastet diesen damit im Bereich um das Aufnahmedurchgangsloch 32 herum. Insbesondere die in axialer Richtung des Haltekörpers 30 sich an das Aufnahmedurchgangsloch 32 anschließenden Bereiche 60 (siehe Fig. 1) sind durch die Möglichkeit der Aufweitung des Haltekörpers 30 gegen ein Reiben oder Bersten gesichert.

## Patentansprüche

1. Gasgenerator, insbesondere Rohrgasgenerator für ein aufblasbares Aufprallschutzkissen, mit
   – einem Außenrohr (12),
   – einem Innenrohr (16) zum Aufnehmen von gasentwickelndem Material (24), wobei das Innenrohr (16) unter Bildung eines Ringzwischenraumes (20) mit radialem Abstand zum Außenrohr (12) in diesem angeordnet ist,
   – Verschlußdeckeln (28) zum Verschließen der offenen stirnseitigen Enden der beiden Rohre (12 und 16) und
   – einer im mittleren Bereich der axialen Erstreckung der Rohre (12 und 16) angeordneten Anzündvorrichtung (26) zum Zünden des gasentwickelnden Materials (24),
   **dadurch gekennzeichnet,**
   – daß in den beiden Rohren (12 und 16) miteinander fluchtende Umfangsdurchbrechungen (50 und 52) angeordnet sind, durch die sich hindurch die Anzündvorrichtung (26) erstreckt, und

    – daß der Zwischenraum (20) zwischen dem Innenrohr (16) und dem Außenrohr (12) im Bereich der Umfangsdurchbrechungen (50 und 52) von einem im wesentlichen ringsegmentförmigen Haltekörper (30) ausgefüllt ist, der ein mit den Umfangsdurchbrechungen (50 und 52) fluchtendes Aufnahmedurchgangsloch (32) zur Halterung der Anzündvorrichtung (26) aufweist.

2.   Gasgenerator nach Anspruch 1, dadurch gekennzeichnet, daß der Haltekörper (30) rohrförmig ausgebildet ist und den ringförmigen Zwischenraum (20) im Bereich der Anzündvorrichtung über den gesamten Umfang ausfüllt.

3.   Gasgenerator nach Anspruch 2, dadurch gekennzeichnet, daß der rohrförmige Haltekörper seinem Aufnahmedurchgangsloch (32) diametral gegenüberliegend einen sich über seine gesamte axiale Länge erstreckenden Schlitz (58) aufweist.

4.   Gasgenerator nach Anspruch 2 oder 3, dadurch gekennzeichnet, daß die beiden Rohre (12 und 16) und der Haltekörper (30) koaxial zueinander angeordnet sind.

5.   Gasgenerator nach einem der Ansprüche 1 bis 4, dadurch gekennzeichnet, daß der Haltekörper (30) sich in axialer Richtung zu beiden Seiten über die Umfangsdurchbrechungen (50 und 52) hinaus erstreckt.

6.   Gasgenerator nach einem der Ansprüche 1 bis 5, dadurch gekennzeichnet, daß die Umfangsdurchbrechungen (50 und 52) die Anzündvorrichtung (26) seitlich umschließen.

7.   Gasgenerator nach einem der Ansprüche 1 bis 6, dadurch gekennzeichnet, daß das Aufnahmedurchgangsloch (32) ein Innengewinde (34) und die Zündvorrichtung (26) ein korrespondierendes Außengewinde (38) aufweist.

8.   Gasgenerator nach einem der Ansprüche 1 bis 7, dadurch gekennzeichnet, daß die Anzündvorrichtung (26) eine in einem Gehäuse (42) angeordnete Anzündeinheit (40) aufweist, wobei das Gehäuse an einem Trägerkörper (36) befestigt ist, welcher seinerseits von dem Haltekörper (30) gehalten ist.

9.   Gasgenerator nach Anspruch 8, dadurch gekennzeichnet, daß die Umfangsdurchbrechung (50) im Außenrohr (12) den Trägerkörper (36) umschließt und daß der Trägerkörper (36) einen Schulteransatz aufweist, der über ein Dichtelement (56) an dem Randbereich der Umfangsdurchbrechung (52) des Innenrohres (16) dichtend anliegt.

10.  Gasgenerator nach einem der Ansprüche 1 bis 9, dadurch gekennzeichnet, daß die Außenumfangsfläche des Innenrohres (16) in einem Bereich abgeflacht und eben ist und daß die Umfangsdurchbrechung (52) des Innenrohres (16) in diesem abgeflachten ebenen Bereich angeordnet ist.

FIG.1

FIG. 2